# EUROPÄISCHE PATENTSCHRIFT

(11) **EP 0 326 980 B1**
(45) Veröffentlichungstag und Bekanntmachung des Hinweises auf die Patenterteilung: **19.05.1993**
(21) Anmeldenummer: 89101513.3
(22) Anmeldetag: 28.01.1989
(51) Int. Cl.: B30B 1/32, B30B 15/00

(54) **Hydraulische Presse**
Hydraulic press
Presse hydraulique

(30) Priorität: 30.01.1988 DE 3802761
(43) Veröffentlichungstag der Anmeldung: 09.08.1989
(73) Patentinhaber: Umformtechnik ERFURT GmbH, D-99086 Erfurt (DE)
(72) Erfinder: Brüssel, Richard, Dipl.-Ing., D-7519 Sulzfeld (DE)

(56) Entgegenhaltungen:
- DE-A- 3 633 807
- DE-B- 1 136 574
- DE-C- 554 810
- FR-A- 2 495 513
- US-A- 4 470 787

## Beschreibung

Die Erfindung bezieht sich auf eine hydraulische Presse, insbesondere zum Formteilverpressen von faserverstärkten Kunststoffen, mit den Merkmalen nach dem Oberbegriff des Anspruchs 1.

Eine derartige Presse ist vorbekannt aus der US-PS 4 076 780. Bei solchen Pressen für die Kunststoffverarbeitung wird der Parallellauf des Pressenstößels in dem Bereich, in dem die Preßkraft wirksam wird, durch Gegenhalteeinrichtungen bewirkt. Die Führung des Pressenstößels während des Schließens, die im Schnellgang durchgeführt wird, muß den Pressenstößel nur noch in solchem Umfang zentrieren, daß ein stoßfreies Eintauchen der Werkzeugführungen sichergestellt wird. Dadurch, daß der Pressenstößel nach dem Kontakt mit den Gegenhalteeinrichtungen eine Beaufschlagung im Sinne einer statischen Überbestimmtheit erfährt, wurde nach Wegen gesucht, die eine solche ausschließt. So ist es z.B. bereits bekanntgeworden, den Pressenstößel während des schnellen Schließens mit hydraulisch angestellten Laufrollen an beiderseits des Stößels angeordneten Rundsäulen zu führen und kurz nach dem Eintauchen der Werkzeugführungen diese Laufrollen kraftlos zu schalten, d.h. diese Stößelführung unwirksam werden zu lassen. Es ist bei derartigen Pressen ferner bekanntgeworden, die Preßzylinder mit dem Pressenstößel über Kugelkalotten zu verbinden.

Die bekannten Konstruktionen sind jedoch nicht in der Lage, die gewünschte freie Einstellung des Pressenstößels zu gewährleisten. Selbst die Kugelkalotten-Verbindung kann unter den vorliegenden Flächenpressungen als starre Verbindung angesehen werden.

Bei einer bekannten hydraulischen Presse (DE-OS 3207242) ist bereits ein hydrostatisches Lager zum Übertragen von Preßkraft eingesetzt worden, bei der die Preßkraft von unten in einen höhenverstellbaren Pressentisch eingeleitet wird. Das hydrostatische Lager ist dabei oben auf dem Kolben des Preßzylinders ausgebildet und weist demgemäß auch kein Element auf, in das ein Teil des zugeordneten Preßzylinders eintaucht. Bei dieser Einrichtung sind bei den die Preßkraft übertragenden Teilen die Dichtprobleme kaum lösbar.

Ferner ist aus der DE-AS 11 36 574 eine gattungsgemäße schubübertragende Einrichtung für hydraulische Pressen vorbekannt, die deren bewegliches Querhaupt mit Druck beaufschlagt. Diese Einrichtung weist jedoch im Zentrum des hydrostatischen Lagers noch ein weiteres als Kugelschale ausgebildetes Lager auf, das das hydrostatische Lager örtlich festlegt. Da die Hydraulikflüssigkeit dem hydrostatischen Lager aus dem Hydraulikzylinder über eine achsparallele Bohrung im Kolben zugeführt wird, muß außerdem der Kolben gegen ein Herausdrücken aus dem topfförmigen Lagerkörper gesichert werden, wozu ein jeweils zentrisch am Kopfende des Kolbens und im Lagerkörper befestigter Zuganker benötigt wird. Der wesentliche Nachteil der bekannter Einrichtung liegt jedoch darin, daß sie nur für eine mit einer Drucküberlagerungsstelle versehene hydraulische Presse geeignet ist, da bei gleichzeitigem Einsatz mehrerer solcher Einrichtungen, die parallel auf das bewegliche Pressen-Querhaupt einwirken, im Falle von dessen Neigungsverstellungen infolge von Abstandsveränderungen der in Normallage miteinander fluchtenden Achsen der einander zugeordneten Teile Zwängungen auftreten.

Der Erfindung liegt daher die Aufgabe zugrunde, eine Presse der eingangs genannten Art so zu gestalten, daß die Verbindung zwischen Preßzylinder und Pressenstößel eine Relativbewegung zuläßt, die zumindest querkraft- und momentenarm ausfällt.

Die Lösung der Aufgabe besteht in den Merkmalen des kennzeichnenden Teils des Anspruchs 1.

Die mit der Erfindung erzielten Vorteile liegen insbesondere darin, daß trotz der praktisch querkraft- und momentenfreien Verbindung die erforderliche Einleitung großer Normalkräfte in den Pressenstößel nicht beeinträchtigt wird.

Besonders geeignet ist der Einsatz der Erfindung für Pressen, bei denen der oder die Preßzylinder über dem Pressenstößel angeordnet sind und ggf. in entsprechende oben offene Ausnehmungen des Pressenstößels eintauchen. Es ist jedoch auch eine Anwendung bei anderen Preßkraft-Übertragungssystemen durch geeignete, die Kräfte umleitende Konstruktionen ohne Schwierigkeiten möglich.

Vorteilhafte Ausgestaltungen der Erfindung sind Gegenstand der Ansprüche 2 bis 11.

In der Zeichnung sind zwei Ausführungsbeispiele der Erfindung schematisch dargestellt und nachfolgend näher erläutert. Es zeigt:
- Fig. 1: eine hydraulische Presse in Ansicht,
- Fig. 2: eine Verbindung zwischen Preßzylinder und Pressenstößel im senkrechten Schnitt.

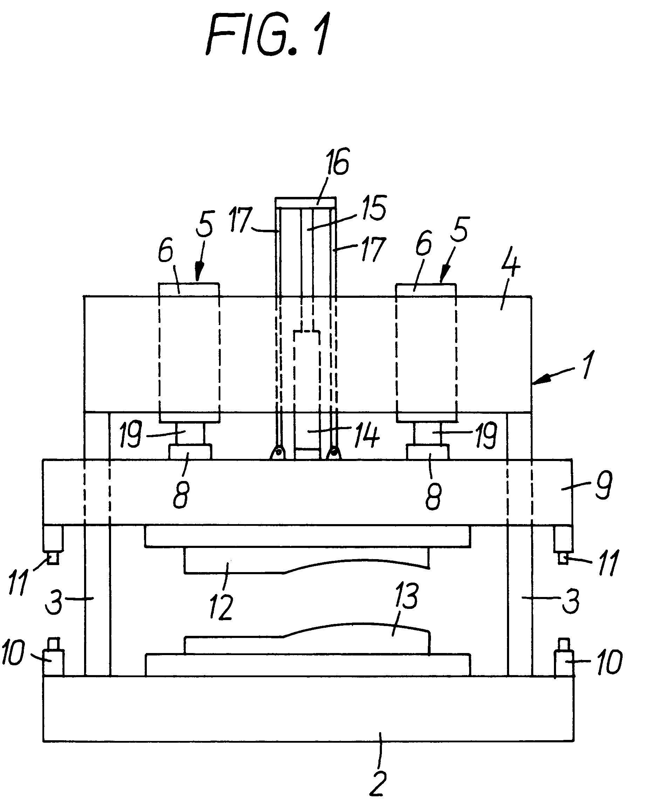

Wie Fig. 1 zeigt, weist die hydraulische Presse ein rahmenartiges Gestell 1 auf, das aus einem Pressentisch 2, zwei seitlich nahe den beiden Stirnseiten des Pressentisches 2 angeordneten Säulen 3 und einem die beiden Säulen 3 miteinander verbindendes Querhaupt 4 besteht. Im Querhaupt 4 sind zwei Preßzylinder 5 mit ihrem Zylinderteil 6 zu beiden senkrechten Pressen-Mittelebenen symmetrisch angeordnet. Die Kolbenstangen 19 der Preßzylinder 5 greifen jeweils in ein hydrostatisches Lagerelement 8 ein, das jeweils auf dem Pressenstößel 9, der beidendig durch die beiden Säulen 3 geführt ist, angeordnet ist. Die Führung an den Säulen 3 erfolgt über nicht dargestellte, hydraulisch anstellbare Laufrollen. Beidendig auf dem Pressentisch 2 sind jeweils paarweise zwei als Hydraulikzylinder 10 ausgebildete Gegenhalteeinrichtungen angeordnet, die jeweils mit einer am Pressenstößel 9 befestigten, höhenverstellbaren Gewindespindel 11 zusammenwirken. Der Pressenstößel 9 und der Pressentisch 2 tragen jeweils das Ober- und Unterteil 12 und 13 des Preßwerkzeugs. Da die Preßzylinder 5 nur Druckkräfte auf den Pressenstößel übertragen, sorgt ein zentrisch zur Presse angeordneter und am Querhaupt 4 befestigter Rückholzylinder 14 für den Aufwärtshub des Pressenstößels. Zu diesem Zweck greift die nach oben ausfahrbare Kolbenstange 15 des Rückholzylinders 14 über einen Querbalken 16 an zwei Zugstangen 17 an, die an der Oberseite des Pressenstößels 8 verankert sind.

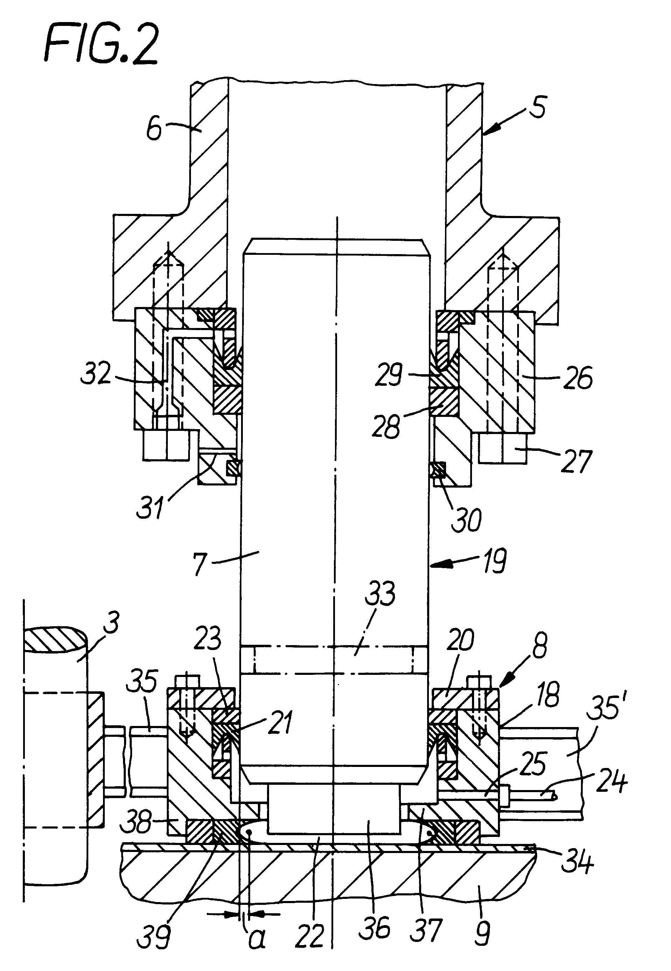

Wie aus Fig. 2 ersichtlich, weist das hydrostatische Lagerelement 8 einen auf der Oberseite des Pressenstößels 9 lose aufgesetzten Ringkörper 18 auf, in den das mit einem zylindrischen Verlängerungsteil 36 versehene Ende eines die Kolbenstange 19 des Preßzylinders 5 bildenden Plungers 7 schließend eingreift. An seiner dem Pressenstößel 9 abgewandten Oberseite weist der Ringkörper 18 einen nach innen weisenden Flansch 20 auf, der der Abstützung eines ringförmigen Dichtelements 21 dient. Zwischen dem Plunger 7 und der Oberseite des Pressenstößels 9 ist durch eingefüllte Hydraulikflüssigkeit somit eine abgeschlossene Kammer 22 gebildet, über welche die hydrostatische Kraftübertragung vom Preßzylinder auf den Pressenstößel erfolgt. Zwischen dem Dichtelement 21 und dem Flansch 20 ist noch ein ringförmiges Führungselement 23, z.B. ein sog. Backring, angeordnet, der die alleinige Führung zwischen dem Plunger 7 und dem Ringkörper 18 übernimmt, wodurch sich vorteilhaft eine sehr kurze, Winkelverstellungen ermöglichende Einspannlänge ergibt. Das Dichtungselement 21 ist zweckmäßig als sog. Nutring ausgebildet. Für ein Nachfüllen von Hydraulikflüssigkeit ist in dem Ringkörper 18 eine mit einem Nachfüllanschluß 24 versehene radiale Bohrung 25 angeordnet.

Preßzylinderseitig ist der Plunger 7 in eine Führung 26 eingespannt, die stirnseitig an dem Zylinderteil 6 des Preßzylinders 5 über Schrauben 27 angeflanscht ist. Das eigentliche Führungselement ist ein elastischer, z.B. aus einem geeigneten Kunststoff bestehender Führungsring 28 von geringer axialer Länge, an den sich zylinderseitig ein Dichtungsring 29, zweckmäßig wieder ein Nutring, anschließt. Am äußeren Ende der Führung ist ein weiterer als Abstreifer ausgebildeter Dichtungsring 30 vorgesehen, wobei zwischen diesem und dem Führungsring eine Leckagebohrung 31 angeordnet ist. Ferner befindet sich in der Führung 26 eine Ablaßbohrung 32 für die Hydraulikflüssigkeit des Zylinders 5.

Durch den Führungsring 28 ist ebenfalls eine kurze Einspannlänge gegeben, so daß im Zusammenwirken mit dem Führungselement 23 eine ggf. nicht zu verhindernde "Schiefeinstellung" des Plungers 7 zur Vermeidung von Zwängungen gewährleistet ist. Diese Ausführungsform der Erfindung bringt den weiteren Vorteil, daß im Zylinderteil des Preßzylinders 5 keine weiteren Verschleißteile vorhanden sind, wie sie sonst am Kolben des Hydraulikzylinders erforderlich sind. Es ist aber auch möglich, den Preßzylinder 5 raumbeweglich im Querhaupt 4 zu lagern, was bei einem mit einem Kolben versehenen Preßzylinder anstelle der beschriebenen Plunger-Lösung, aber auch zusätzlich zu dieser, erfolgen kann. Die Zusammenfassung der abdichtenden Teile in der angeflanschten Führung 26 ermöglicht geringeren Fertigungsaufwand für den Zylinderteil 6.

Wie aus Fig. 2 weiter ersichtlich, ist auf die in diesem Bereich durch ein poliertes Stahlblech 34 gebildete Oberfläche des Pressenstößels 9 der lose aufgesetzte Ringkörper 18 des hydrostatischen Lagerelements 8 durch eine der zugeordnete Säule 3 umgreifende Halterung 35 so mit entsprechendem Spiel geführt, daß die Bewegungen des Pressenstößels 9 mitvollzogen werden können. Der gezeigte Ringkörper 18 ist zu diesem Zweck mit dem nicht gezeigten Ringkörper des weiteren in gleicher Weise durch eine Halterung 35 geführten Preßzylinders 5 mittels einer Überbrückung 35′ verbunden. Spielpassungen können auch zwischen den Ringkörpern und den Halterungen 35 bzw. der Überbrückung 35′ vorgesehen sein.

Der stirnseitige zylindrische Verlängerungsteil 36 des in den Ringkörper 18 eingreifenden Endes des Plungers 7 wird vollständig von der Hydraulik-Flüssigkeit in der Kammer 22 umspült. Im - bezogen auf die Achsrichtung - mittleren Bereich des Verlängerungsteils 36 weist der Ringkörper 18 einen nach innen weisenden Flansch 37 auf, dessen Innendurchmesser größer als der Durchmesser des Verlängerungsteils 36 und kleiner als der Durchmesser des Plungers 7 ist. Ebenfalls am unteren Ende des Ringkörpers 18 ist außenseitig ein nur nach unten vorspringender ringförmiger Kragen 38 ausgebildet, gegen dessen innere Kante sich ein wieder als Nutring ausgebildetes Dichtungselement 39 abstützt. Der nach innen weisende Flansch 20 im oberen Bereich des Ringkörpers 18, gegen den sich das Dichtelement abstützt, ist abnehmbar angeschraubt.

Durch diese Ausbildung entsteht ein schwimmendes Lager gegenüber der Oberfläche des Pressenstößels 9, bei dem durch die gewählten Abmessungen eine vollständige Abdichtung erreicht wird. Ein ausreichendes Andrücken des Ringkörpers 18 an den Pressenstößel 9 wird dadurch erzielt, daß der Wirkdurchmesser des Dichtelements 39 geringfügig kleiner als der Durchmesser des Plungers 7 bzw. der nicht als Plunger ausgebildeten Kolbenstange 19 gewählt wird. Dieser Wirkdurchmesser liegt bei dem liegend angeordneten Nutring des Dichtelement 39 bekanntlich etwa im mittleren Bereich der Nut dieses Nutrings, wie es durch das Maß a angedeutet ist. Obwohl hierdurch die Abdichtung der Kammer 22 sichergestellt ist, beträgt der auf diese Weise über die Dichtung 39 auf den Pressenstößel 9 übertragene Anteil an der Preßkraft aber nur einen Bruchteil der Gesamtpreßkraft des Preßzylinders, so daß sich bei relativer Verschiebung zwischen dem Pressenstößel 9 und dem Plunger 7 nur verhältnismäßig kleine quer zur Preßkraft gerichtete Kräfte einstellen, die ein Verschieben des Pressenstößels 9 ermöglichen und etwaige Zwängungen sicher vermeiden.

Bei einer Ausführung mit einer "starr" geführten Kolbenstange 19 des Preßzylinders 5 kann - wie aus Fig. 1 ersichtlich - die Führung an der Säule 3 entfallen. Es wird dann auf diese Weise ein hydrostatisches Pendel- und Gleitschuhlager gebildet, das für verhältnismäßig kleine Kippwinkel und verhältnismäßig große seitliche Gleitwege geeignet ist. Für einen solchen Fall, bei dem außerdem als Preßzylinder ein doppelt wirkender hydraulischer Zylinder eingesetzt wird, der demgemäß sowohl für den abwärts gerichteten Preßhub wie auch für den zurückholenden Aufwärtshub einsetzbar ist, kann eine entsprechende Nut wie die durch Strichpunktlinien angedeutete Ringnut 33 in der Kolbenstange 19 dem Eingreifen eines mit dem Pressenstößel 9 verbundenen Halterungselements dienen, das auch beim schnellen Abwärtshub in jedem Fall dann zum Anschlag gebracht wird, wenn die Abdichtung zwischen dem Ringkörper 18 und der Kolbenstange 19 versagt. Im Normalfall wird dabei die Kolbenstange 19 durch die entsprechende Saugwirkung mitgenommen. Das gilt auch im Falle der Plunger-Ausführung nach Fig. 2. Die Ringnut 33 kann ferner der Halterung des Plungers 7 bzw. der Kolbenstange 19 beim Wechsel des Dichtelements 21 und des Führungselements 23 sowie auch für einen Sensorabgriff dienen.

## Patentansprüche

1. Hydraulische Presse, insbesondere zum Formteilverpressen von faserverstärkten Kunststoffen, bei der die Preßkraft durch mindestens einen hydraulischen Preßzylinder über eine zugeordnete Verbindungsstelle in einen seitlich geführten und durch Gegenhalteeinrichtungen abbremsbaren Pressenstößel eingeleitet wird, wobei die Verbindungsstelle durch ein hydrostatisches Lagerelement gebildet ist, das einen teilweise mit Hydraulikflüssigkeit gefüllten und innen mit mindestens einem ringförmigen Dichtelement versehenen Ringkörper aufweist, in den das Ende der Kolbenstange des Preßzylinders eintaucht,
**dadurch gekennzeichnet**, daß das hydrostatische Lagerelement (8) als Ringkörper (18) ausgebildet und auf einer Stützfläche des Stößels (9) dichtend angeordnet ist und daß der Wirkdurchmesser der Abdichtung (39) gegenüber dem Pressenstößel (9) kleiner als der Durchmesser des in den Ringkörper eintauchenden Endes der Kolbenstange (19) ist.

2. Presse nach Anspruch 1, dadurch gekennzeichnet, daß das eintauchende Ende der Kolbenstange (19) einen zylindrischen Verlängerungsteil (36) kleineren Durchmessers aufweist und daß der Ringkörper (18) einen nach innen weisenden, mit Abstand von seinem unteren Ende angeordneten Flansch (37) aufweist, der bei Eingriff der Kolbenstange (19) im Bereich von dessen Verlängerungsteil (36) liegt.

3. Presse nach Anspruch 1 oder 2, dadurch gekennzeichnet, daß der Ringkörper (18) am oberen Ende einen nach innen weisenden Flansch (20) zur Abstützung für ein ringförmiges Dichtelement (21) aufweist.

4. Presse nach einem der Ansprüche 1 bis 3, dadurch gekennzeichnet, daß der Ringkörper (18) an mindestens einer der Führungen (3) des Pressenstößels (9) dessen Bewegungen zulassend geführt ist.

5. Presse nach Anspruch 4, bei der mehrere Preßzylinder verwendet sind, dadurch gekennzeichnet, daß die den Preßzylindern (5) zugeordneten Ringkörper (18) untereinander verbunden sind.

6. Presse nach einem der vorhergehenden Ansprüche, dadurch gekennzeichnet, daß die Kolbenstange (19) ein im Endbereich des Zylinderteils (6) des Preßzylinders (5) winkelbeweglich abdichtend geführter Plunger (7) ist.

7. Presse nach Anspruch 6, dadurch gekennzeichnet, daß die Führung (26) des Plungers (7) durch einen am Zylinderteil (6) angeordneten, Winkelverstellungen ermöglichenden Führungsring (28) gebildet ist, an den sich beidseitig ein Dichtungsring (29; 30) anschließt.

8. Presse nach Anspruch 7, dadurch gekennzeichnet, daß der Führungsring (28) eine geringe axiale Länge aufweist und/oder elastisch ausgebildet ist.

9. Presse nach Anspruch 7 oder 8, dadurch gekennzeichnet, daß die Führung (26) an dem Zylinderteil (6) stirnseitig angeflanscht ist.

10. Presse nach einem der vorhergehenden Ansprüche, dadurch gekennzeichnet, daß der Ringkörper (18) eine radiale Bohrung (25) zum Nachfüllen von Hydraulik-Flüssigkeit aufweist.

11. Presse nach einem der vorhergehenden Ansprüche, dadurch gekennzeichnet, daß die Kolbenstange (19) etwas außerhalb des Ringkörpers (18) mindestens eine Ringnut (33) aufweist.

## Claims

1. A hydraulic press, more particularly for compressing molded parts made of fibre-reinforced plastics materials, in which the pressing force is introduced by at least one hydraulic pressing cylinder via an associated connection site into a laterally guided pressing ram, which can be decelerated by counter pressing devices, the connection site being formed by a hydrostatic bearing element, which comprises an annular element partially filled with hydraulic fluid and provided on the inside with at least one annular sealing element, into which annular element the end of the piston rod of the pressing cylinder plunges, characterised in that the hydrostatic bearing element (8) is constructed as an annular element (18) and is arranged in a sealing-tight manner on a support surface of the ram (9), and the effective diameter of the sealing (39) relative to the pressing ram (9) is smaller than the diameter of the end of the piston rod (19) penetrating the annular element.

2. A press according to claim 1, characterised in that the penetrating end of the piston rod (19) comprises a cylindrical extension (36) with a reduced diameter,and the annular element (18) comprises an inwardly directed flange (37), which is arranged at a distance from the lower end of the annular element and lies in the region of the extension (36) of the piston rod (19) when the latter engages.

3. A press according to claim 1 or 2, characterised in that, at its upper end, the annular element (18) comprises an inwardly directed flange (20) acting as a support for an annular sealing element (21).

4. A press according to one of claims 1 to 3, characterised in that the annular element (18) is guided on at least one of the guides (3) of the pressing ram (9) so as to allow its movements.

5. A press according to claim 4, in which a plurality of pressing cylinders are used, characterised in that the annular elements (18) associated with the pressing cylinders (5) are connected with one another.

6. A press according to one of the preceding claims, characterised in that the piston rod (19) is a plunger (7), which is guided with angular displaceability in a sealing-tight manner in the end region of the cylinder element (6).

7. A press according to claim 6, characterised in that the guide (26) of the plunger (7) is formed by a guide ring (28) arranged on the cylinder element (6), which guide ring allows for angular adjustments and adjoining both sides of which is a sealing ring (29; 30).

8. A press according to claim 7, characterised in that the guide ring (28) has a small axial length and/or is elastic in construction.

9. A press according to claim 7 or 8, characterised in that the guide (26) is flanged onto the end face of the cylinder element (6).

10. A press according to one of the preceding claims, characterised in that the annular element (18) comprises a radial bore (25) for refilling with hydraulic fluid.

11. A press according to one of the preceding claims, characterised in that the piston rod (19) comprises at least one annular groove (33) somewhat beyond the annular element (18).

## Revendications

1. Presse hydraulique, en particulier pour le formage de pièces de matière plastique renforcée par des fibres, pour laquelle la force de pressage est produite par au moins un vérin de presse hydraulique, par l'intermédiaire d'un point de raccordement associé, dans un poinçon de presse guidé latéralement et pouvant être freiné au moyen de dispositifs d'arrêt à contre effet, étant entendu que le point de raccordement est constitué par un élément formant palier hydrostatique, qui présente un corps annulaire muni intérieurement d'au moins un organe d'étanchéité annulaire et rempli en partie par un fluide hydraulique, corps annulaire dans lequel plonge l'extrémité de la tige de piston du vérin de presse,
caractérisé en ce que l'élément formant palier hydrostatique (8) est réalisé sous la forme d'un corps annulaire (18) et est disposé, en faisant étanchéité, sur une surface d'appui du poinçon (9), et en ce que le diamètre efficace du joint d'étanchéité (39) avec le poinçon de presse (9) est plus petit que le diamètre de l'extrémité de la tige de piston (19) plongeant dans le corps annulaire.

2. Presse suivant la revendication 1, caractérisée en ce que l'extrémité plongeante de la tige de piston (19) présente une partie cylindrique en prolongement (36) ayant un diamètre plus petit, et en ce que le corps annulaire (18) présente une bride (37) tournée vers l'intérieur et disposée à une certaine distance de son extrémité inférieure, bride qui, lors de l'enfoncement de la tige de piston (19), se trouve dans la zone de sa partie en prolongement (36).

3. Presse suivant la revendication 1 ou la revendication 2, caractérisée en ce que le corps annulaire (18) présente, à son extrémité supérieure, une bride (20) tournée vers l'intérieur pour donner appui à un organe d'étanchéité annulaire (21).

4. Presse suivant l'une des revendications 1 à 3, caractérisée en ce que le corps annulaire (18) est guidé sur au moins l'un des guidages (3) du poinçon de presse (9) de façon à permettre son déplacement.

5. Presse suivant la revendication 4, dans le cas de laquelle on utilise plusieurs cylindres de presse, caractérisée en ce que les corps annulaires (18) associés aux cylindres de presse (5) sont reliés entre eux.

6. Presse suivant l'une quelconque des revendications précédentes, caractérisée en ce que la tige de piston (19) est un plongeur (7) guidé de façon étanche dans la zone d'extrémité de la pièce de cylindre (6) du vérin de presse (5) et pouvant se déplacer angulairement.

7. Presse suivant la revendication 6, caractérisée en ce que le guidage (26) du plongeur (7) est constitué par une bague de guidage (28), placée sur la pièce de cylindre (6) et permettant un déplacement angulaire, bague sur laquelle se raccorde, des deux côtés, une bague d'étanchéité (29; 30).

8. Presse suivant la revendication 7, caractérisée en ce que la bague de guidage (28) présente une longueur axiale faible et/ou est réalisée élastique.

9. Presse suivant la revendication 7 ou la revendication 8, caractérisé en ce que le guidage (26) est fixé frontalement par bride sur la pièce de cylindre (6).

10. Presse suivant l'une quelconque des revendications précédentes, caractérisée en ce que le corps annulaire (18) présente un alésage radial (25) pour compléter le remplissage du liquide hydraulique.

11. Presse suivant l'une quelconque des revendications précédentes, caractérisée en ce que la tige de piston (19) présente, légèrement en dehors du corps annulaire (18), au moins une rainure annulaire (33).
